# EUROPEAN PATENT APPLICATION

(11) **EP 0 805 096 A1**
(43) Date of publication of application: **05.11.1997**
(21) Application number: 97850069.2
(22) Date of filing: 29.04.1997
(51) Int. Cl.: B62D 33/033

(54) **A device at sideboards on vehicle platforms**

(30) Priority: 20.08.1996 SE 9603024; 29.04.1996 SV 9601648
(71) Applicant: Rosén, Göran, 640 50 Björnlunda (SE)
(72) Inventor: Rosén, Göran, 640 50 Björnlunda (SE)
(74) Representative: Roth, Ernst Adolf Michael

(57) **Abstract**

A device for vehicle platform (11) flaps (14) connected to each other with pivot axles arranged at a lower edge (15) of the platform flaps and the edge side (9) of the vehicle platform, at which said end edge (15) ofthe platform flaps (14) is designed with a cross section in the form of a part-circular, open hook (20), which makes one part of the pivot axle. The second part of the pivot axle is a holder means (10) having a corresponding part-circular, open section (22), which makes a bearing surface (12) for the part-circular hook (20). The part-circular section (22) of the holder means (10) is formed with an inwards directed end section (23), which in the vertical upwards folded position of the platform (14) in cooperation with the end (21) of the hook (20) makes a stop against lifting the flap and in its vertical, downwards folded position makes a stop against lifting off the flap from the holder means (10) in cooperation with a limitation surface (19) arranged at the flap (14), while the flap(14) in an inclined angle position is disconnectable from the holder means (10).

## Description

The present invention refers to a device for vehicle platform flaps connected to each other with pivot axles arranged at a lower edge of the platform flaps and the edge side of the vehicle platform, at which said end edge of the platform flaps is designed with a cross section in the form of a part-circular, open hook, which makes one part of the pivot axle, where the second part of the pivot axle is a holder means having a corresponding part-circular, open section, which makes a bearing surface for the part-circular hook.

### Background of the invention

Pivot axles of the above mentioned kind are traditionally produced of band iron that has been formed to loops, where one type of the loops forms attachment for a tap that forms bearing for other types of loops. One type of the loops is mounted with suitable dividing distance along the platform side, while the other type of loops is mounted with corresponding dividing distance along the flaps.

### Technical problem

The object of the present invention is to make a pivot axle, which is simpler and cheaper to produce than the above described production method.

### Solution

This object has been solved by the fact that the part-circular section of the holder means is formed with an inwards directed section, which in the vertical upwards folded position of the platform flap in cooperation with the end of the hook makes a stop against lifting of the flap and in its vertical, downwards folded position makes a stop against lifting off the flap from the holder means in cooperation with a limitation surface arranged at the flap, while the flap in an inclined angle position is disconnectable from the holder means.

### Description of the drawings

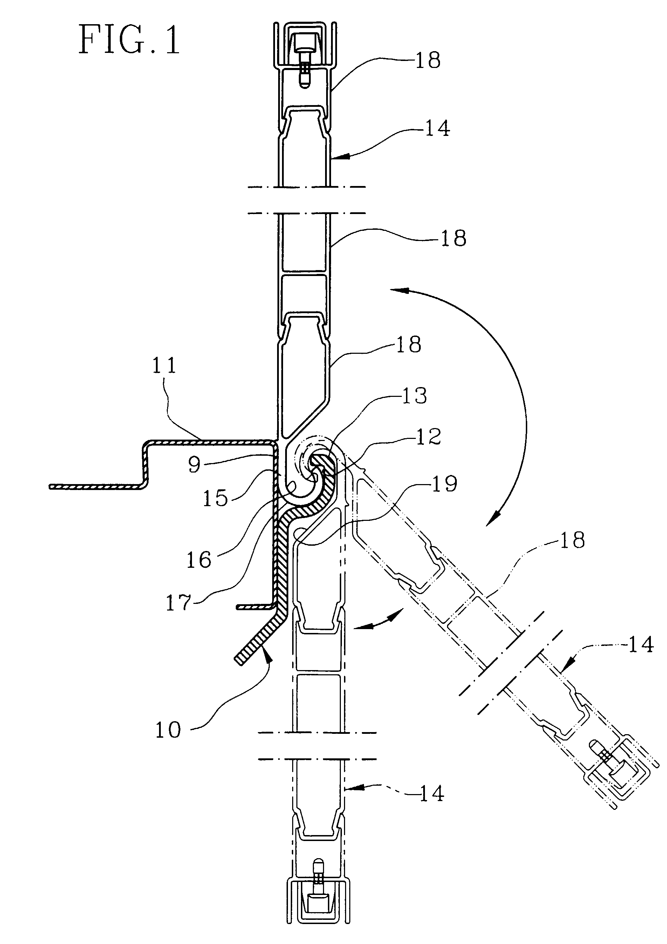

The invention will below be described with reference to an embodiment shown in the accompanying drawing where Fig. 1 is a end view illustrating a pivot axle according to the invention and
Fig. 24 shows a section of the platform flap at the pivot axle at three different positions.

### Description of the embodiments

The device shown in the drawings comprises a holder means 10, which is mounted at the vertical external surface of a frame beam 11 on a loading platform. The holder means forms one of the parts of the pivot axle and is shaped with a part-circular, open section 22, which has an internal bearing surface 12 and an external surface 13. The holder means may be mounted by weldings, bolts or other suitable attachment means at the frame beam 11. The figure shows a holder means 10, but the attachment of a flap is normally performed with two or more holder means.

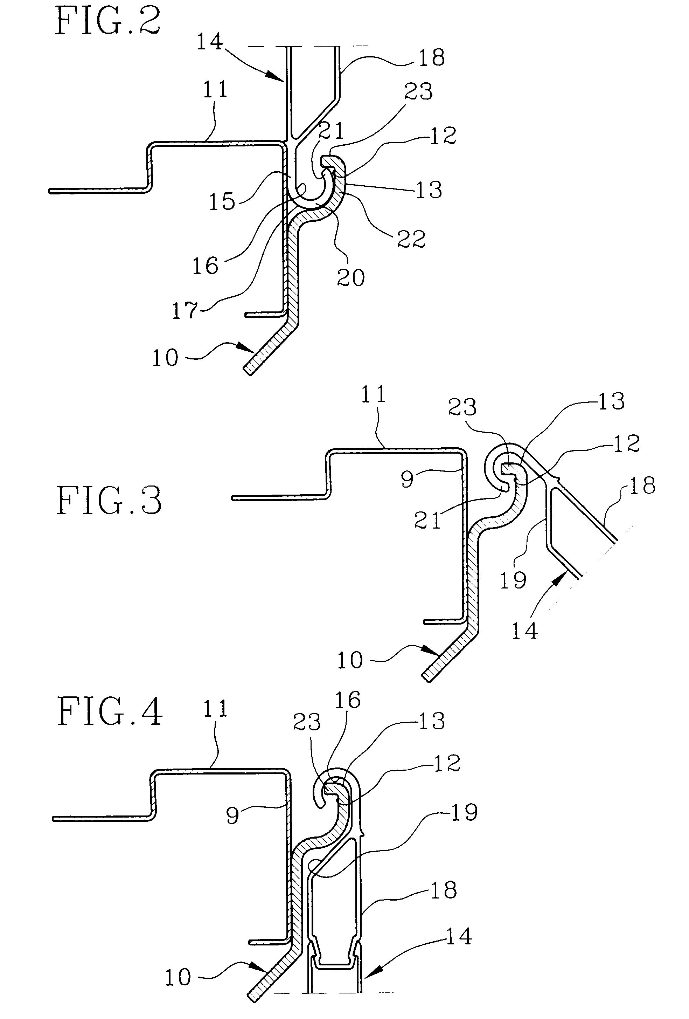

The platform flap 14 is at one lower edge end 15 provided with an open hook 20 having a part-circular cross section, which has an internal bearing surface 16 and an external surface 17. In upright flap position the hook 20 rests with its external surface 17 against the internal bearing surface 12 n inwards directed end section 23, which in the 14 upright, vertical position ofthe flap - fig. 2- forms a stop against lifting off the flap from the lower pivot axle half, i.e. the holder means 10. In the downward flap position - fig. 4 - the hook 20 of the flap is resting with its intemal surface 16 against the external surface 13 of the holder means.

Accordingly the edge side 15 of the flap 14 slides over from the inside of the holder mean 10 to its outside, while the flap is turning from the upper vertical position shown with continuous lines in fig. 1 to the lower vertical position, which is shown with dotted lines. The movement is mounted in such way that the area pressure is equally distributed over large areas.

By this design of the hook formed edge side 15, the flaps may be made of extruding profiles 18 with or without tube-formed cross sections.

The flap 14 is also provided with a bevel limitation surface 19, which in the lower vertical position -fig. 4- forms a stop surface, which prevents the flap to be affected by any upwards directed force to glide from the engagement with the holder means 10. On the other hand it is simple to lift off the flap from the holder means 10, when the flap is located in the bevel angle position shown with broken lines - fig.3.

The invention is not limited to the above described embodiments, but several modifications are possible within the frame of the preceding claim. Besides the flap does not necessarily have to consist of a number of sections inserted in each other, as shown in the figure.

## Claims

1. A device for vehicle platform (11) flaps (14) connected to each other with pivot axles arranged at a lower edge (15) of the platform flaps and the edge side (9) of the vehicle platform, at which said end edge (15) of the platform flaps (14) is designed with a cross section in the form of a part-circular, open hook (20), which makes one part of the pivot axle, where the second part of the pivot axle is a holder means (10) having a corresponding part-circular, open section (22), which makes a bearing surface (12) for the part-circular hook (20),
**characterized in**,
that the part-circular section (22) of the holder means (10) is formed with an inwards directed end section (23), which in the vertical upwards folded position of the platform (14) in cooperation with the end (21) of the hook (20) makes a stop against lifting the flap and in its vertical, downwards folded position makes a stop against lifting off the flap from the holder means (10) in cooperation with a limitation surface (19) arranged at the flap (14), while the flap(14) in an inclined angle position is disconnectable from the holder means (10).

2. A device according to claim 1,
**characterized in**,
that the hook has an internal surface (16) and an external surface (17), that the edge side of the flap in upwards folded flap position rests with the external surface against the internal surface (12) of the holder means (10), and that the edge side (15) of the flap i downwards folded flap position rests with the internal surface (16) against the outer surface (13) of the holder means.

3. A device according to claim 1,
**characterized in**,
that the flap (14) is made from one or more extruded profiles (18).
